# EUROPÄISCHE PATENTSCHRIFT

(11) **EP 3 685 373 B1**
(45) Veröffentlichungstag und Bekanntmachung des Hinweises auf die Patenterteilung: **04.03.2026**
(21) Anmeldenummer: 18769343.7
(22) Anmeldetag: 12.09.2018
(51) Int. Cl.: G10L 15/02, G10L 15/04, G06N 3/09, G06N 3/0442, G01C 21/26

(54) **KRAFTFAHRZEUG**
MOTOR VEHICLE
VÉHICULE AUTOMOBILE

(30) Priorität: 19.09.2017 DE 102017216571
(43) Veröffentlichungstag der Anmeldung: 29.07.2020
(73) Patentinhaber: Volkswagen Aktiengesellschaft, 38440 Wolfsburg (DE)
(72) Erfinder: BUSS, Okko, 12347 Berlin (DE); PLESCHKA, Mark, 10781 Berlin (DE)
(86) Internationale Anmeldenummer: PCT/EP2018/074593
(87) Internationale Veröffentlichungsnummer: WO 2019/057580

(56) Entgegenhaltungen:
- US-A- 5 675 705
- US-A1- 2014 244 255

## Beschreibung

Die Erfindung betrifft ein Kraftfahrzeug, wobei das Kraftfahrzeug ein Navigationssystem und eine Bediensteuerung, die datentechnisch über ein Bussystem mit dem Navigationssystem verbunden ist, oder eine Bediensteuerung umfasst. Die Erfindung betrifft zudem ein Verfahren zur Herstellung eines Kraftfahrzeuges, insbesondere des vorgenannten Kraftfahrzeuges.

Die US 5 675 705 offenbart ein Spracherkennungsgerät, das die Erkennung von Sprachsilben und die Identifizierung von Sprachwörtern durchführt. Die Sprachsilbenerkennung wird an einem Ensemble durchgeführt, das aus fast tausend Silben besteht, die vom menschlichen Stimmsystem gebildet werden, wodurch Variationen berücksichtigt werden, die durch Sprachdialekte und Sprachakzente verursacht werden. Zur Silbenerkennung werden die fast tausend Sprachsilben mithilfe eines auf Spektrogrammmerkmalen basierenden Ansatzes in einer hierarchischen Struktur analysiert, die auf der Region des Vokalsystems, aus der die Silbe stammt, der Wurzelsilbe aus dieser Vokalregion und dem Vokal basiert.

Die US 2014/244255 A1 offenbart eine integrierte Halbleiterschaltungsvorrichtung zur Spracherkennung umfasst eine Konvertierungskandidaten-Einstelleinheit, die Textdaten, die Wörter oder Sätze angeben, zusammen mit einem Befehl empfängt und die Textdaten in Übereinstimmung mit dem Befehl in eine Konvertierungsliste einstellt. Dabei ist eine Standardmuster-Extraktionseinheit vorgesehen, die aus einer Spracherkennungsdatenbank ein Standardmuster extrahiert, das mindestens einem Teil der Wörter oder Sätze entspricht, die durch die in der Konvertierungsliste festgelegten Textdaten angegeben werden.

Die US 2009/182559 A1 offenbart ein Verfahren zur Spracherkennung, das die Schritte umfasst:
- Bereitstellen einer Datenbank mit phonetischen Repräsentationen von Einträgen von zumindest einer lexikalischen Liste;
- Detektieren und Digitalisieren eines Sprachsignals, das eine verbale Äußerung darstellt;
- Erzeugen einer phonetischen Repräsentation des Sprachsignals als ein erstes Erkennungsergebnis;
- Erzeugen von Varianten der phonetischen Repräsentation;
- Auswählen zumindest einer der Varianten der phonetischen Repräsentation als ein zweites Erkennungsergebnis; und
- Vergleichen des zweiten Erkennungsergebnisses mit den gespeicherten phonetischen Repräsentationen von Einträgen von der zumindest einen gespeicherten lexikalischen Liste.

Eine Bedienung eines in einem Fahrzeug implementierten Systems durch akustische Eingaben ist z. B. aus der WO 01/28187 A1 bekannt. Akustische Eingaben im Zusammenhang mit Kraftfahrzeugen sind darüber hinaus aus der DE 10 2004 055 609 A1, der DE 10 2004 061 782 A1 und der DE 10 2007 052 055 A1 bekannt. Die US2016/0171974 A1 offenbart ein Spracherkennungssystem mit sogenanntem Deep Learning. Dabei soll ein System, das ohne ein Phoneme-Wörterbuch auskommt, besonders geeignet sein für laute Umgebungen. Die US 8,340,958 B2 offenbart ebenfalls ein Spracherkennungssystem. Dabei wird die Spracheingabe eines Nutzers durch Vergleich mit Eingaben einer Liste unter Verwendung von Sprachmodellstatistiken verwendet.

Es hat sich jedoch gezeigt, dass Sprachbediensysteme im Fahrzeug vom Nutzer gesprochene Begriffe, die aus großen Datenbanken stammen, ohne technische Sonderlösungen nicht zuverlässig erkennen, z. B. wenn der Nutzer eine Adresse in Deutschland oder einen Albumnamen aus einer umfangreicheren Mediathek spricht. Bei Spracheingaben, in denen der Nutzer ferner eine freie Formulierung wählt (z. B. "Fahre mich bitte nach Berlin in die Carnotstraße Nummer 4." oder "Ich möchte Michael Jackson Thriller hören.") ist die Erkennung kaum möglich, außer die Eingabe folgt einer starren Reihenfolge der Begriffe aus einer Datenbank. Um die Erkennung solcher Begriffe zu ermöglichen, werden z. B. die zu sprechenden Datenbanken (z. B. Navigationsdatenbank, Mediathek ...) in umfangreiche "Sprachmodelle" in proprietäre Formate vorkompiliert und auf dem Gerät abgelegt. Die Lösung, vorkompilierte Sprachmodelle zu nutzen, hat jedoch folgende Nachteile:
- Hoher Speicherplatz: Sie erfordert viel Speicherplatz. Für Spracheingaben mit Bezug auf die Navigationsdatenbank fallen z. B. 1 GB allein für das Sprachmodell aller deutschen Adressen an.
- Mangelnde Änderungsfähigkeit: Vorkompilierte Modelle sind nicht gewappnet gegen Änderungen in der Datengrundlage (z. B. bei Update vom Lieferanten). Ändert sich beispielsweise eine Datenbank, müssen die Sprachmodelle neu kompiliert und installiert werden. Bereits kompilierte Modelle werden somit obsolet, da neue Begriffe aus der Datenbank nicht abgedeckt sind und entfallene fälschlicherweise weiterhin erkannt werden. Modelle müssen also jeweils neu kompiliert und auf dem Gerät installiert bzw. abgelegt werden.
- Abhängigkeit von Internetverbindungen: Systeme, die eine Onlineverbindung nutzen, haben außerdem den Nachteil, dass bei mangelnder Verbindung (z. B. Fahrt durch Funkloch, Nutzung in Tiefgarage, Konfigurationsfehler durch Nutzer, aufgebrauchtes Datenvolumen) keine entsprechende Verarbeitung möglich ist.
- Einschränkung der Nutzereingabe: Die Nutzung vorkompilierter Modelle bei geringen verfügbaren Hardwareressourcen erfordert meist eine starre Reihenfolge der Begriffe in der Datenbank. Adressen müssen z. B. in einer festgelegten Reihenfolge von Stadt-Straße - Hausnummer gesprochen werden (s. o.)
- Ferner müssen Begriffe meist vollständig ausgesprochen werden (z. B. "Wolfgang von Goethe Straße" statt "Goethe Straße")
- Begriffe außerhalb der bekannten Datenlage (z. B. deutschsprachige Adressen in Belgien) können nicht erkannt werden.

Es ist insbesondere Aufgabe der Erfindung, ein verbessertes, besonders für Kraftfahrzeuge geeignetes Spracherkennungssystem bzw. eine entsprechende Spracheingabe vorzusehen. Es ist insbesondere wünschenswert vorgenannte Nachteile zu vermeiden.

Vorgenannte Aufgabe wird durch ein Kraftfahrzeug gemäß Anspruch 1 gelöst, das ein Navigationssystem und eine Bediensteuerung, die datentechnisch über ein Bussystem mit dem Navigationssystem verbunden ist, oder eine Bediensteuerung umfasst, wobei das Kraftfahrzeug ein Mikrofon aufweist, wobei das Kraftfahrzeug ein ein Statistik Language Model umfassendes Phonem-Erzeugungsmodul zur Generierung von Phonemsilben aus einem Sprachsignal bzw. dem Ausgangssignal des Mikrofons umfasst, wobei die Phoneme Teil einer vorgegebenen Auswahl von ausschließlich einsilbigen Phonemen sind, und wobei das Kraftfahrzeug ein Phoneme-to-Grapheme-Modul zur Erzeugung von Eingaben zur Bedienung des Kraftfahrzeuges in Abhängigkeit einer Aneinanderreihung von von dem Phonem-Erzeugungsmodul generierten einsilbigen Phonemsilben umfasst.

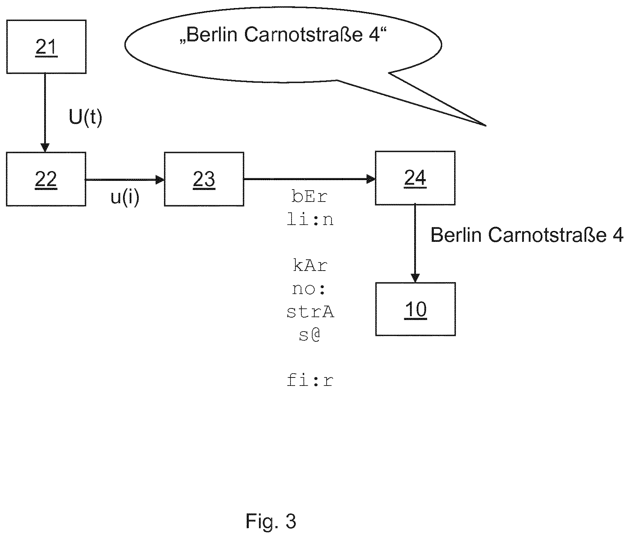

Ein Sprachsignal im Sinne der Erfindung ist insbesondere ein elektrisches Signal, das den Informationsgehalt einer akustischen Eingabe enthält, wie etwa das Ausgangssignal eines Mikrofons. Ein derartiges elektrisches Signal bzw. ein derartiges Ausgangssignal eines Mikrofons im Sinne der Erfindung ist insbesondere ein digitalisiertes (A/D gewandeltes) elektrisches Signal, vgl. z. B. u(i) in Fig. 3.

Eine Auswahl von ausschließlich einsilbigen Phonemen soll im Sinne der Erfindung auch eine Auswahl von einsilbigen Phonemen sein, denen ein kleiner Anteil an nicht-einsilbigen Phonemen im Wesentlichen ohne Wirkung auf ein Training eines neuronalen Netzes oder ohne technische Wirkung hinzu gemischt ist, lediglich in der Absicht die Einschränkung "ausschließlich" zu umgehen.

Ein Phonem-Erzeugungsmodul im Sinne der Erfindung ist bzw. umfasst insbesondere ein Statistical Language Model (SLM), insbesondere im ARPA Format: Verschiedene SLM Software-Toolkits bieten Schnittstellen zum SLM im ARPA Format an, u. a. Carnegie Mellon University, SRI International, Google.

Ein Phoneme-to-Grapheme-Modul im Sinne der Erfindung umfasst bzw. ist ein neuronales Netz, insbesondere ein rekurrentes neuronales Netz, d. h. ein RNN (recursive neural network). In vorteilhafter Ausgestaltung besitzt ein derartiges RNN eine Eingangsschicht (Input-Layer) mit einer Dimension, die der Anzahl der phonetischen Zeichen entspricht, aus denen Silben gebildet werden können. In weiterer vorteilhafter Ausgestaltung der Erfindung entspricht die Dimension der Ausgangsschicht (Output-Layer) des RNN der Anzahl von Zeichen im Alphabet in der Ziel-Sprache. In weiterhin vorteilhafter Ausgestaltung der Erfindung umfasst das RNN 2 bis 4 Zwischenschichten (Hidden Layers). In weiterhin vorteilhafter Ausgestaltung der Erfindung beträgt die Dimension einer Attention-Layer des RNN von zwischen 10 und 30. Ein besonders geeignetes Ausführungsbeispiel eines RNN ist wie folgt dimensioniert:
- unidirektionales LSTM (*Long-Short-Term-Memory*) Netzwerk mit 3 Hidden Layers
- Dimension Input-Layer = 69 (bzw. die Anzahl phonetischer Zeichen, aus denen Silben gebildet werden konnten.)
- Dimension der Hidden-Layers = 512
- Dimension Output-Layer = 59, bzw. Anzahl Zeichen im Alphabet der Ziel-Sprache.
- Dimension Attention-Layer für "Gedächtnis"= 20

Vorgenannte Aufgabe wird zudem durch ein Verfahren zum Herstellen eines vorgenannten Kraftfahrzeuges gelöst, wobei das Verfahren folgende Schritte umfasst:
- Bereitstellen einer ersten Datenbasis von Eingaben bzw. Befehlen zur Bedienung von Funktionen des Kraftfahrzeuges, insbesondere zur Bedienung eines Navigationssystems des Kraftfahrzeuges und/oder eines Infotainmentsystems des Kraftfahrzeuges,
- Erzeugen einer zweiten Datenbasis, die ausschließlich einsilbige Phonemesilben umfasst,
- Trainieren eines Phonem-Erzeugungsmoduls mittels bzw. unter Verwendung der ersten Datenbasis,
- Trainieren eines Phoneme-to-Grapheme-Moduls mittels bzw. unter Verwendung der zweiten Datenbasis, mit im Wesentlichen ausschließlich mit paarweise zugeordneten Einträgen, die eine Phonemsilbe umfassen, der jeweils ein einziger einsilbiger Begriff zugeordnet ist,
- datentechnisches Verbinden des Ausgangs des Phonemen-Erzeugungsmoduls mit dem Eingang des Phoneme-to-Grapheme-Moduls, und
- Implementieren des Phonem-Erzeugungsmoduls und des Phoneme-to-Grapheme-Moduls in einem Kraftfahrzeug.

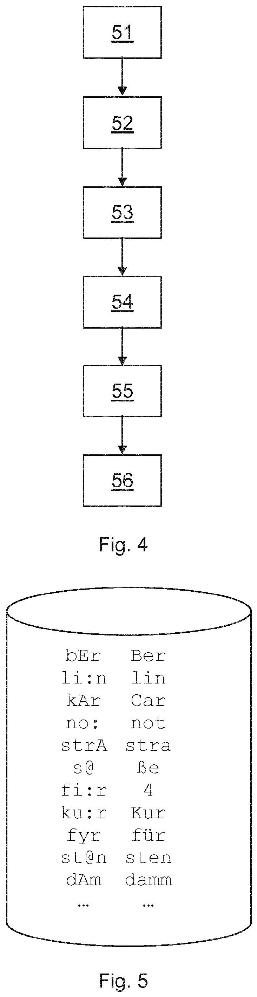

In vorteilhafter Ausgestaltung der Erfindung umfasst die zweite Datenbasis Phoneme, die ausschließlich einsilbig sind. In weiterhin vorteilhafter Ausgestaltung der Erfindung umfasst die zweite Datenbasis paarweise zugeordnete Einträge, wobei einem einsilbigen Phonem jeweils ein (einziger) einsilbige Begriff zugeordnet ist. In weiterhin vorteilhafter Ausgestaltung der Erfindung wird das Phoneme-to-Grapheme-Modul, im Wesentlichen ausschließlich, mit paarweise zugeordneten Einträgen trainiert, die ein einsilbiges Phonem umfassen, dem jeweils ein (einziger) einsilbiger Begriff zugeordnet ist. In besonders bevorzugter Ausgestaltung umfasst die zweite Datenbasis, wie beispielsweise in Figur 5 dargestellt, paarweise zugeordnete Einträge, wobei einem einsilbigen Phonem jeweils ein (einziger) Begriff bzw. eine (einzige) Bedeutung zugeordnet ist, bzw. wobei einem einsilbigen Phonem jeweils ein (einziger) einsilbige Begriff zugeordnet ist. Dies hat insbesondere folgende Vorteile:
- Robustheit: Fehler bei der Silbenerkennung in der Sub-Word Recognition bedeuten geringere Fehler in der Gesamtsequenz, die die Eingabe für das Phoneme-to-Grapheme-Modul darstellt. Ein Fehler auf Silbenebene hat somit ggf. geringeren Einfluss auf den Output des RNNs.
- Genauigkeit: Ein auf Silben trainiertes SLM trägt mehr inhaltliche Aussagekraft als eines für Phoneme, da Silben innerhalb einer Domäne (z. B. Navigation) spezifischer verteilt und aufgebaut sind als in anderen Domänen. Phoneme sind für die Sprache allgemeingültig und tragen somit weniger Informationsgehalt, der für die Genauigkeit der Erkennung eine Rolle spielt.

Es hat sich gezeigt, dass auf diese Weise auch unter den widrigen akustischen Bedingungen in einem Kraftfahrzeug eine besonders zuverlässige Bedienung durch Spracheingabe, insbesondere eine besonders zuverlässige Bedienung eines Navigationssystems des Kraftfahrzeuges durch Spracheingabe, erreicht wird.

Vorgenannte Aufgabe wird zudem durch ein Spracherkennungssystem, insbesondere für ein Kraftfahrzeug gelöst, wobei das Spracherkennungssystem ein Mikrofon aufweist, wobei das Spracherkennungssystem ein Phonem-Erzeugungsmodul zur Generierung von Phonemen aus einem Sprachsignal bzw. dem Ausgangssignal des Mikrofons umfasst, wobei die Phoneme Teil einer vorgegebenen Auswahl von ausschließlich einsilbigen Phonemen sind, und wobei das Spracherkennungssystem ein Phoneme-to-Grapheme-Modul zur Erzeugung von Eingaben bzw. Befehlen in Abhängigkeit (einer Aneinanderreihung) von von dem Phonem-Erzeugungsmodul generierten einsilbigen Phonemen umfasst.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel für ein Kraftfahrzeug in einer Innenansicht,
- Fig. 2: das Kraftfahrzeug gemäß Fig. 1 in einer funktionalen Prinzipskizze,
- Fig. 3: ein Ausführungsbeispiel eines Spracherkennungssystems des Kraftfahrzeuges gemäß Fig. 1 bzw. Fig. 2,
- Fig. 4: ein Ausführungsbeispiel eines Verfahrens zum Herstellen eines Kraftfahrzeuges gemäß Fig. 1 bzw. Fig. 2, und
- Fig. 5: ein Ausführungsbeispiel einer zweiten Datenbasis im Sinne der Ansprüche.

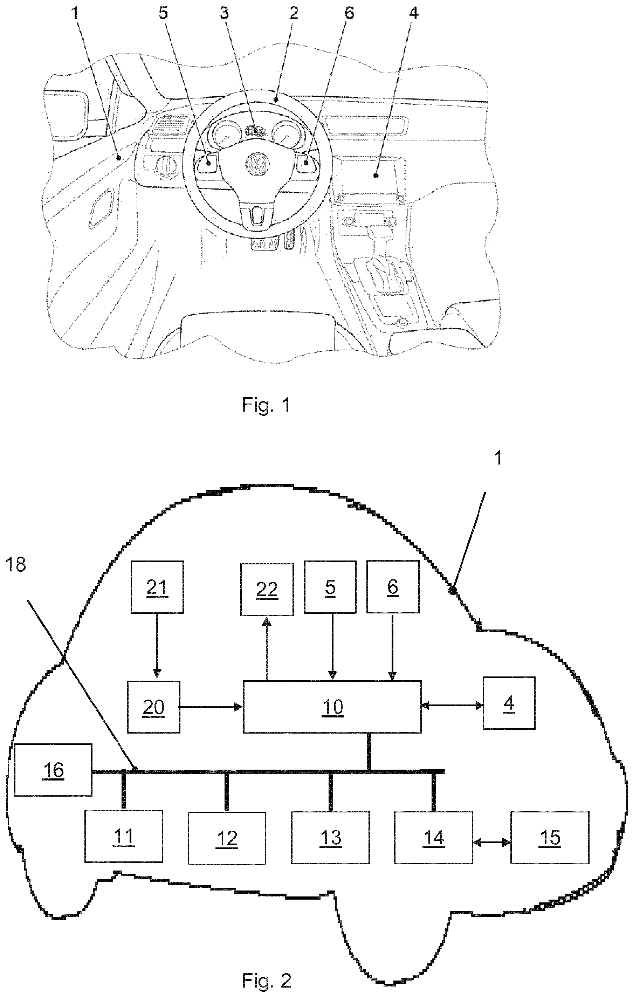

Fig. 1 zeigt ein Ausführungsbeispiel einer ausschnittsweisen Innenansicht eines - in Fig. 2 in einer funktionalen Prinzipdarstellung dargestellten - Kraftfahrzeuges 1. Das Kraftfahrzeug 1 umfasst ein vor (bzw. aus der Sicht eines Fahrers des Kraftfahrzeuges hinter) einem Lenkrad 2 angeordnetes Kombiinstrument 3 sowie ein Display 4 über einer Mittelkonsole des Kraftfahrzeuges 1. Zudem umfasst das Kraftfahrzeug 1 in den Speichen des Lenkrades 2 angeordnete Bedienelemente 5 und 6, die z. B. als Kreuz-Wipptaster ausgestaltet sind. Darüber hinaus umfasst das Kraftfahrzeug 1 eine Anzeige- und Bediensteuerung 10 zur Bedienung des Displays 4 und zur Auswertung von Eingaben, die mittels eines auf dem Display 4 angeordneten Touchscreens erfolgen, sodass mittels des Touchscreens ein Navigationssystem 11, ein Infotainmentsystem 12, eine Klimaautomatik 13, eine Telefonschnittstelle 14 bzw. ein über dies angekoppeltes Telefon 15 sowie weitere Funktionen 16, insbesondere menügeführt, bedienbar sind. Dazu ist die Anzeige- und Bediensteuerung 10 datentechnisch mittels eines Bussystems 18 mit dem Navigationssystem 11, mit dem Infotainmentsystem 12, mit der Klimaautomatik 13, mit der Telefonschnittstelle 14 sowie mit den weiteren Funktionen 16 verbunden. Es kann zudem vorgesehen sein, dass das Kombiinstrument 3 ebenfalls ein Display aufweist, dass mittels der Anzeige- und Bediensteuerung 10 angesteuert wird. Eine, insbesondere menügeführte, Bedienung des Navigationssystems 11, des Infotainmentsystems 12, der Klimaautomatik 13, der Telefonschnittstelle 14 bzw. des Telefons 15 sowie der weiteren Funktionen 16 kann mittels des Touchscreens, mittels der Kreuz-Wipptaster 5 und 6 sowie mittels einer in Fig. 3 dargestellten Spracheingabe 20 erfolgen, der ein Mikrofon 21 zugeordnet ist. Ausgaben des Systems erfolgen mittels des Displays 4, mittels eines Displays im Kombiinstrument 3 und/oder mittels eines Lautsprechers 22.

Die in Fig. 3 abgebildete Spracherkennung 20 umfasst ein Phonem-Erzeugungsmodul 23 zur Generierung von Phonemen aus einem Sprachsignal bzw. dem Ausgangssignal U(t) des Mikrofons 21 bzw. dem entsprechenden Ausgangssignal u(i) des A/D Wandlers 22 zum Digitalisieren des Ausgangssignals U(t) des Mikrofons 21. Dazu ist ein Sub-Word-Recognition-Modul vorgesehen, das zunächst anstelle der Begriffe/Wörter aus der Datenbank, Silben als ganze Wörter erkennt. In Sprachen mit entsprechender Schrift können dies auch Schriftzeichen, wie z. B. japanisches Katakana oder Hiragana genutzt werden. Auf diese Weise wird der Suchraum der Spracherkennung von mehreren zehn- bis hunderttausend Begriffen aus der Datenbank (z. B. alle Städte und Straßen Deutschlands), auf einige Dutzend (Phoneme der deutschen Sprache) bzw. Tausend (deutschsprachige Silben) reduziert. Für die Erkennung der Phoneme/Silben werden statistische Sprachmodelle (SLM, statistical language model) verwendet, die in Bezug auf Phoneme/Silben der jeweiligen Sprache trainiert wurden. Für die Eingabe "Berlin Carnotstraße 4" wird das SLM z. B. mit den Silben
- bEr
- li:n
- kAr
- no:
- StrA
- s@
- fi:r
trainiert. Das so trainierte SLM wird im Betrieb des Kraftfahrzeuges 1 zur Erkennung genutzt. Soll der Nutzer Begriffe außerhalb dieser Trainingsdaten sprechen können, z. B. Trägersätze wie "fahre mich nach ...", wird das SLM als Platzhalter in einem weiteren, generelleren SLM eingebettet, das zusätzlich diese Trägersätze umfasst.

Der Ausgangswert des Phonem-Erzeugungsmoduls 23 ist der Eingangswert in ein Phoneme-to-Grapheme-Modul 24 zur Erzeugung von Eingaben zur Bedienung des Kraftfahrzeuges 1 in Abhängigkeit einer Aneinanderreihung von von dem Phonem-Erzeugungsmodul 23 generierten einsilbigen Phonem (Deep Phoneme-to-Grapheme). Dabei werden die erkannten Phoneme bzw. Silben automatisch in Begriffe der Sprache umgewandelt. Diese Umwandlung heißt auch Phonem-zu-Graphem Wandlung (phoneme-to-grapheme conversion).

Fig. 4 zeigt ein Ausführungsbeispiel für ein Verfahren zum Herstellen eines Kraftfahrzeuges mit einer vorgenannten Spracheingabe. Dabei erfolgt in einem Schritt 51 das Bereitstellen einer ersten Datenbasis von Eingaben und Befehlen zur Bedienung von Funktionen des Kraftfahrzeuges, insbesondere des Navigationssystems 11 des Kraftfahrzeugs 1. Es folgt ein Schritt 52 zum Erzeugen einer zweiten Datenbasis von ausschließlich einsilbigen Phonemen, wie sie beispielsweise in Fig. 5 gezeigt ist.

Es folgt ein Schritt 53 zum Erzeugen bzw. Trainieren des Phonem-Erzeugungsmoduls 23 mittels der ersten Datenbasis. Dabei wird ein SLM aus bekannten Sequenzen von Phonemen in Silbenform aus der Zieldomäne (z. B. Navigation) für die Sub-Word-Spracherkennung (in einer dem Fachmann bekannten Weise) trainiert.

Es folgt ein Schritt 54 zum Erzeugen bzw. Trainieren eines RNN als Phoneme-to-Grapheme-Modul 24 mittels der zweiten Datenbasis (wie sie beispielsweise in Fig. 5 dargestellt ist). Das RNN wird aus paarweise angeordneten Begriffen und deren Aussprache (in Silbenform) für Phoneme-to-Grapheme trainiert. Hierbei kommt ein Deep Learning Ansatz zum Mapping von Textsequenzen auf andere Textsequenzen zum Einsatz. Ein rekurrentes neuronales Netz (RNN, recurrent neural net) wird mit Begriffen aus der Zieldomäne - z. B. die Navigationsdatenbank - und deren jeweiliger Phoneme/Silben trainiert. Beispiele für Trainingsdaten (Zuordnung von Begriff → Phoneme/Lautschrift):
- Berlin → / bEr li:n /
- Carnotstraße → / kAr no: StrA s@ /
- 4 → / fi:r /

Das so trainierte RNN ist in der Lage auf Basis von Phonemen Rückschlüsse über die Schreibweise von beliebigen Begriffen aus der Domäne zu treffen. Aus der Eingabe der Phoneme /ku:r fyr st@n dAm/ schließt das RNN beispielsweise den Begriff "Kurfürstendamm". Dies gilt auch für im Training ungesehene Begriffe.

Es folgt ein Schritt 55 zum datentechnischen Verbinden des Ausgangs des Phonem-Erzeugungsmoduls 23 mit dem Eingang des Phoneme-to-Grapheme-Moduls 24. Dem Schritt 55 folgt oder geht voran ein Schritt 56 zum Implementieren des Phonem-Erzeugungsmoduls und des Phoneme-to-Grapheme-Moduls in dem Kraftfahrzeug.

Die Erfindung ermöglicht eine schlanke, speichereffiziente Verarbeitung von Spracheingaben, die sich auf große Mengen von Inhalten bezieht, ohne diese explizit zu kennen. Sie ermöglicht somit eine Systementwicklung, die unabhängig von Content- und Datenupdates ist, und daher kostspielige Updates und Folgeentwicklungen einspart. Sprachbediensysteme können ferner aufgrund der Erfindung bei häufigen Bedienabläufen in der Eingabeverarbeitung auf speicher- und rechenintensive Serverleistung und die Notwendigkeit einer Onlineverbindung verzichten. Die Erfindung ermöglicht außerdem Eingabeverarbeitung, die dem Nutzer in der Reihenfolge und Ausdrucksweise flexible Eingaben erlaubt und somit die Performance der Spracherkennung im Kraftfahrzeug erheblich steigert.

## Patentansprüche

1. Kraftfahrzeug (1), wobei das Kraftfahrzeug (1) ein Navigationssystem (11) und eine Bediensteuerung (10), die datentechnisch über ein Bussystem (18) mit dem Navigationssystem (11) verbunden ist, oder eine Bediensteuerung umfasst, und wobei das Kraftfahrzeug (1) ein Mikrofon (21) aufweist, **dadurch gekennzeichnet, dass** das Kraftfahrzeug (1) ein ein Statistik Language Model umfassendes Phonem-Erzeugungsmodul (23) zur Generierung von Phonemen aus einem Sprachsignal und/oder dem Ausgangssignal des Mikrofons (21) umfasst, wobei die Phoneme Teil einer vorgegebenen Auswahl von ausschließlich einsilbigen Phonemsilben sind, wobei
das Kraftfahrzeug (1) ein Phoneme-to-Grapheme-Modul (24) zur Erzeugung von Eingaben zur Bedienung des Kraftfahrzeuges (1) in Abhängigkeit einer Aneinanderreihung von von dem Phonem-Erzeugungsmodul (23) generierten einsilbigen Phonemsilben umfasst.

2. Kraftfahrzeug (1) nach Anspruch 1, **dadurch gekennzeichnet, dass** das Phoneme-to-Grapheme-Modul (24) ein RNN umfasst.

3. Kraftfahrzeug (1) nach Anspruch 2, **dadurch gekennzeichnet, dass** das RNN zwischen 2 und 4 Zwischenschichten umfasst.

4. Kraftfahrzeug (1) nach Anspruch 2 oder 3, **dadurch gekennzeichnet, dass** das RNN eine Gedächtnis-Schicht mit einer Dimension zwischen 10 und 30 umfasst.

5. Kraftfahrzeug (1) nach Anspruch 2, 3 oder 4, **dadurch gekennzeichnet, dass** das RNN eine Eingangsschicht aufweist, deren Dimension gleich der Anzahl der phonetischen Zeichen ist, aus denen Silben gebildet werden können.

6. Kraftfahrzeug (1) nach Anspruch 2, 3, 4 oder 5, **dadurch gekennzeichnet, dass** das RNN eine Ausgangsschicht umfasst, deren Dimension gleich der Anzahl der Zeichen der Ziel-Sprache ist.

7. Kraftfahrzeug (1) nach Anspruch 2, 3, 4 oder 5, **dadurch gekennzeichnet, dass** das RNN eine Ausgangsschicht umfasst, deren Dimension gleich der Anzahl der Zeichen im Alphabet der Ziel-Sprache ist.

8. Verfahren zum Herstellen eines Kraftfahrzeuges nach einem der vorhergehenden Ansprüche, wobei das Verfahren folgende Schritte umfasst:
- Bereitstellen einer ersten Datenbasis von Eingaben oder Befehlen zur Bedienung von Funktionen des Kraftfahrzeuges,
- Erzeugen einer zweiten Datenbasis, die ausschließlich einsilbige Phonemesilben umfasst,
- Trainieren eines Phonem-Erzeugungsmoduls unter Verwendung der ersten Datenbasis,
- Trainieren eines Phoneme-to-Grapheme-Moduls unter Verwendung der zweiten Datenbasis mit im Wesentlichen ausschließlich mit paarweise zugeordneten Einträgen, die eine Phonemsilbe umfassen, der jeweils ein einziger einsilbiger Begriff zugeordnet ist,
- datentechnisches Verbinden des Ausgangs des Phonem-Erzeugungsmoduls mit dem Eingang des Phoneme-to-Grapheme-Moduls, und
- Implementieren des Phonem-Erzeugungsmoduls und des Phoneme-to-Grapheme-Moduls in einem Kraftfahrzeug.

9. Verfahren nach Anspruch 8, **dadurch gekennzeichnet, dass** die zweite Datenbasis Phonemsilben umfasst, die ausschließlich einsilbig sind.

10. Verfahren nach Anspruch 8, **dadurch gekennzeichnet, dass** die zweite Datenbasis paarweise zugeordnete Einträge umfasst, wobei einer Phonemsilbe jeweils ein einziger einsilbiger Begriff zugeordnet ist.

## Claims

1. Motor vehicle (1), the motor vehicle (1) comprising a navigation system (11) and an operating controller (10) which is connected via a bus system (18) to the navigation system (11) for data transmission, or an operating controller, and the motor vehicle (1) having a microphone (21), **characterized in that** the motor vehicle (1) comprises a phoneme generation module (23) having a statistics language model for generating phonemes from a speech signal and/or the output signal of the microphone (21), the phonemes being part of a predefined selection of exclusively monosyllabic phoneme syllables, the motor vehicle (1) comprising a phoneme-to-grapheme module (24) for generating inputs for operating the motor vehicle (1) on the basis of a sequence of monosyllabic phoneme syllables generated by the phoneme generation module (23).

2. Motor vehicle (1) according to claim 1, **characterized in that** the phoneme-to-grapheme module (24) comprises an RNN.

3. Motor vehicle (1) according to claim 2, **characterized in that** the RNN comprises between 2 and 4 intermediate layers.

4. Motor vehicle (1) according to claim 2 or claim 3, **characterized in that** the RNN comprises a memory layer with a dimension between 10 and 30.

5. Motor vehicle (1) according to claim 2, claim 3 or claim 4,
**characterized in that** the RNN has an input layer the dimension of which is equal to the number of phonetic symbols from which syllables can be formed.

6. Motor vehicle (1) according to claim 2, claim 3, claim 4 or claim 5, **characterized in that** the RNN comprises an output layer the dimension of which is equal to the number of characters in the target language.

7. Motor vehicle (1) according to claim 2, claim 3, claim 4 or claim 5, **characterized in that** the RNN comprises an output layer the dimension of which is equal to the number of characters in the alphabet of the target language.

8. Method for producing a motor vehicle according to any of the preceding claims, wherein the method comprises the following steps:
- providing a first database of inputs or commands for operating functions of the motor vehicle,
- creating a second database which comprises only monosyllabic phoneme syllables,
- training a phoneme generation module using the first database,
- training a phoneme-to-grapheme module using the second database with substantially exclusively entries which are assigned pairwise and which each comprise a phoneme syllable to which a single monosyllabic term is assigned,
- connecting the output of the phoneme generation module to the input of the phoneme-to-grapheme module for data transmission, and
- implementing the phoneme generation module and the phoneme-to-grapheme module in a motor vehicle.

9. Method according to claim 8, **characterized in that** the second database comprises phoneme syllables which are exclusively monosyllabic.

10. Method according to claim 8, **characterized in that** the second database comprises entries assigned pairwise, each phoneme syllable being assigned a single monosyllabic term.

## Revendications

1. Véhicule automobile (1), dans lequel le véhicule automobile (1) comprend un système de navigation (11) et une commande de manipulation (10) qui est connectée selon la technique des données au système de navigation (11) par l'intermédiaire d'un système de bus (18), ou une commande de manipulation, et dans lequel le véhicule automobile (1) présente un microphone (21),
**caractérisé en ce que** le véhicule automobile (1) comprend un module de génération de phonèmes (23) comprenant un modèle de langage statistique pour la génération de phonèmes à partir d'un signal vocal et/ou du signal de sortie du microphone (21), dans lequel les phonèmes font partie d'une sélection prédéfinie de syllabes de phonèmes exclusivement monosyllabiques, dans lequel le véhicule automobile (1) comprend un module phonème à graphème (24) pour la génération d'entrées pour la manipulation du véhicule automobile (1) en fonction d'une juxtaposition de syllabes de phonèmes monosyllabiques générées par le module de génération de phonèmes (23).

2. Véhicule automobile (1) selon la revendication 1, **caractérisé en ce que** le module phonème à graphème (24) comprend un RNN.

3. Véhicule automobile (1) selon la revendication 2, **caractérisé en ce que** le RNN comprend entre 2 et 4 couches intermédiaires.

4. Véhicule automobile (1) selon la revendication 2 ou 3,
**caractérisé en ce que** le RNN comprend une couche de mémoire comportant une dimension comprise entre 10 et 30.

5. Véhicule automobile (1) selon la revendication 2, 3 ou 4,
**caractérisé en ce que** le RNN présente une couche d'entrée dont la dimension est égale au nombre de caractères phonétiques à partir desquels des syllabes peuvent être formées.

6. Véhicule automobile (1) selon la revendication 2, 3, 4 ou 5,
**caractérisé en ce que** le RNN comprend une couche de sortie dont la dimension est égale au nombre de caractères de la langue cible.

7. Véhicule automobile (1) selon la revendication 2, 3, 4 ou 5,
**caractérisé en ce que** le RNN comprend une couche de sortie dont la dimension est égale au nombre de caractères dans l'alphabet de la langue cible.

8. Procédé pour la fabrication d'un véhicule automobile selon l'une des revendications précédentes, dans lequel le procédé comprend les étapes suivantes :
- fourniture d'une première base de données d'entrées ou d'instructions pour la manipulation de fonctions du véhicule automobile,
- création d'une seconde base de données qui comprend uniquement des syllabes de phonèmes monosyllabiques,
- entraînement d'un module de génération de phonèmes à l'aide de la première base de données,
- entraînement d'un module phonème à graphème à l'aide de la seconde base de données avec sensiblement exclusivement des entrées associées par paires, lesquelles entrées comprennent une syllabe de phonème à laquelle est associé respectivement un seul terme monosyllabique,
- connexion selon la technique des données de la sortie du module de génération de phonèmes à l'entrée du module phonème à graphème, et
- mise en œuvre du module de génération de phonèmes et du module phonème à graphème dans un véhicule automobile.

9. Procédé selon la revendication 8, **caractérisé en ce que** la seconde base de données comprend des syllabes de phonèmes qui sont exclusivement monosyllabiques.

10. Procédé selon la revendication 8, **caractérisé en ce que** la seconde base de données comprend des entrées associées par paires, dans lequel respectivement un seul terme monosyllabique est associé à une syllabe de phonème.
